# NEUE EUROPÄISCHE PATENTSCHRIFT

(11) **EP 2 629 050 B2**
(45) Veröffentlichungstag und Bekanntmachung des Hinweises auf die Entscheidung über den Einspruch: **15.02.2017**
(45) Hinweis auf die Patenterteilung: 25.09.2013
(21) Anmeldenummer: 12001008.7
(22) Anmeldetag: 16.02.2012
(51) Int. Cl.: G01B 11/02, G01C 3/08, G01S 17/48, G01S 7/481

(54) **Triangulationslichttaster**
Triangulation sensor
Capteur de triangulation

(43) Veröffentlichungstag der Anmeldung: 21.08.2013
(73) Patentinhaber: Sick AG, 79183 Waldkirch (DE)
(72) Erfinder: Wiethege, Friedhelm, 79350 Sexau (DE); Merettig, Gerhard, 79350 Sexau (DE)
(74) Vertreter: Manitz, Finsterwald & Partner GbR

(56) Entgegenhaltungen:
- DE-A1-102004 009 484
- DE-A1-102006 055 743
- DE-A1-102007 004 632
- US-A1- 2008 130 005

## Beschreibung

Die Erfindung betrifft einen Triangulationslichttaster mit wenigstens einem Lichtsender zum Aussenden eines Lichtsignals in eine Detektionszone, einem Lichtempfänger, welcher mehrere Empfängerelemente aufweist, zum Empfangen von diffus und/oder spiegelnd reflektiertem Licht aus der Detektionszone, und einer Empfangsoptik, die im Strahlgang vor dem Lichtempfänger angeordnet ist, wobei sich die Position eines von dem reflektierten Licht auf dem Lichtempfänger erzeugten Lichtflecks in einer Triangulationsrichtung in Abhängigkeit von der Entfernung des Objekts ergibt.

Es ist bekannt, die Entfernung von Gegenständen in einem Überwachungsbereich mit Lichttastern zu bestimmen, die nach dem Triangulationsprinzip arbeiten. Ein derartiger Lichttaster, wie er beispielsweise in DE 198 50 270 A1 beschrieben ist, umfasst einen Lichtsender, beispielsweise eine Leuchtdiode oder einen Laser, und gegebenenfalls eine Sendeoptik auf, um einen Lichtstrahl in eine Detektionszone zu einem dort gegebenenfalls befindlichen zu detektierenden Objekt auszusenden. Das Sendelicht kann von einem solchen Objekt reflektiert und von einem Lichtempfänger detektiert werden, der zusammen mit einer Empfangsoptik eine Empfangseinheit bildet. Der Lichtempfänger besteht bei bekannten Lösungen aus einer Zeile von fotosensitiven Empfängerelementen.

In Abhängigkeit der Entfernung zwischen dem Triangulationslichttaster und dem reflektierten Objekt ändert sich die Position eines durch das reflektierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Lichttaster bestimmt werden. Weiterhin kann bei entsprechender Auswertung der Lichtverteilung auf dem Lichtempfänger bestimmt werden, ob sich ein Objekt innerhalb oder außerhalb eines Tastbereichs befindet, d.h. ob die Entfernung des Objekts innerhalb oder außerhalb vorbestimmter Grenzen liegt.

Um z.B. eine hohe Genauigkeit bei der Entfernungsbestimmung zu erreichen, muss ein solcher Lichtempfänger eine Vielzahl fotosensitiver Empfängerelemente aufweisen, die in der Triangulationsrichtung nebeneinander angeordnet sind.

Bei Triangulationslichttastern mit Hintergrundausblendung umfasst der Lichtempfänger wenigstens zwei Empfängerelemente, wobei ein so genanntes Nahelement von einem Lichtstrahl getroffen wird, wenn er von einem Objekt reflektiert wird, das in einem Nahbereich vor dem Triangulationslichttaster angeordnet ist, und ein Fernelement von einem Lichtstrahl getroffen wird, der von einem Objekt reflektiert wird, das sich in einem Fernbereich vor dem Triangulationslichttaster befindet.

Zur Signalauswertung wird die Differenz zwischen den Fotodiodenströmen dieser beiden Elemente gebildet. Um die Grenze zwischen Nah- und Fernbereich einzustellen, wird z.B. bei mechanisch einstellbaren Systemen das Empfängerelement, die Empfangsoptik oder ein Spiegel mechanisch bewegt und der Schwerpunkt des durch den Lichtempfänger abgebildeten Lichtflecks auf den physisch vorhandenen Trennsteg zwischen Nah- und Fernelement zentriert.

Bei Triangulationslichttastern mit Hintergrundausblendung ohne mechanisch bewegte optische Elemente wird der Lichtfleck z.B. auf einen mehrfach segmentierten Lichtempfänger abgebildet. Zur Realisierung eines Triangulationslichttasters mit Hinter- oder Vorgrundausblendung simulieren solche Systeme eine Differenzdiode mit elektronisch einstellbarem Trennsteg. Bei Verwendung von Lichtempfängern mit mehreren Empfängerelementen ist der Trennsteg auf diese Weise elektronisch nur in diskreten Stufen zu verstellen und kann nur auf den physisch vorhandenen Trennstegen zwischen den einzelnen Empfängerelementen liegen. Für eine Einstellung der Grenze zwischen Vorder- und Hintergrund muss der Lichtempfänger in hinreichend kleine Empfängerelemente aufgeteilt werden. Dies macht ebenfalls den Einsatz hoch aufgelöster und langer Fotodiodenzeilen mit einer großen Anzahl von Empfängerelementen notwendig.

Bei beiden beschriebenen Systemen des Standes der Technik ist es wünschenswert, wenn die genaue Position des Lichtflecks auf dem Lichtempfänger mit einer Genauigkeit bekannt ist, die nicht durch die minimale Größe der Empfängerelemente bestimmt ist.

Die europäische Patentanmeldung EP 1 111 332 B1 beschreibt dazu ein Verfahren, mit dem die Ermittlung der Position des Schwerpunkts eines Lichtflecks auf einer Fotodiodenzeile mit einer Genauigkeit bestimmt werden kann, die nicht mehr von den räumlichen Abmessungen der einzelnen Fotodiodenzellen, also der Empfängerelemente, abhängig ist. Dazu wird die Größe der Fotodiodenzellen derart gewählt, dass ein Lichtfleck mindestens drei benachbarte Fotodiodenzellen trifft und durch geeignete Auswertung der Signale die Position des Schwerpunkts bestimmt wird.

Dadurch ergibt sich die Notwendigkeit, dass in Richtung der Anordnung der Fotodiodenzellen mindestens drei Fotodiodenzellen vom Lichtfleck getroffen werden.

Insbesondere bei Lichtsendern mit einer sehr kleinen Emissionsfläche, wie z.B. Laserdioden oder Punktstrahler-LEDs, kann dieses Drei-Elemente-Kriterium bei gegebener Geometrie des Empfängerelemente-Arrays unter Umständen nicht mehr erfüllt werden. Hier hilft z.B. eine Vergrößerung des Lichtflecks.

Eine Möglichkeit zur Lichtfleckvergrößerung ist es, den Lichtempfänger außerhalb des Fokus der Empfangsoptik zu platzieren. Hierbei sind infrafokale oder extrafokale Anordnungen denkbar.

Eine daraus resultierende rotationssymmetrische Vergrößerung des Lichtflecks kann allerdings zur Überstrahlung der Empfängerelemente quer zur Triangulationsrichtung und damit zu energetischen Verlusten führen. Außerdem weist ein Lichtfleck auf dem Lichtempfänger außerhalb der Schärfeebene eine beträchtliche Unschärfe auf, wodurch die Detektionspräzision verschlechtert wird.

Um den Lichtfleck auf dem Lichtempfänger insbesondere in Triangulationsrichtung zu vergrößern, kommen bei anderen bekannten Lösungen torische Empfangsoptiken zum Einsatz, die in Sagittal- und Meridionalebene unterschiedliche Brennweiten aufweisen. Dadurch findet eine Abbildung in Sagittal- und Meridionalebene mit unterschiedlichen Abbildungsmaßstäben statt, so dass die Schärfeebene der Sagittal- und der Meridionalebene hintereinander liegen. Wird nun ein Lichtempfänger in die Schärfeebene der kürzeren Brennweite gebracht, liegt es in Triangulationsrichtung infrafokal außerhalb der Schärfeebene. Während also der Lichtfleck quer zur Triangulationsrichtung scharf abgebildet wird, ist die Abbildung in Triangulationsrichtung unscharf und insofern verbreitert. Bei einer solchen Anordnung weist der Lichtfleck auf den Lichtempfänger aber gerade in der relevanten Triangulationsrichtung eine beträchtliche Unschärfe auf, so dass auch hier die Detektionspräzision verschlechtert wird.

Weitere Triangulationslichttaster sind in DE 10 2007 004 632 A1, US 2008/130005 A1 und DE 10 2004 009 484 A1 beschrieben.

Es ist die Aufgabe der vorliegenden Erfindung, einen Triangulationslichttaster anzugeben, mit dem der Lichtfleck auf dem Lichtempfänger in Triangulationsrichtung vergrößert werden kann, ohne die Detektionssensitivität zu stark negativ zu beeinflussen.

Diese Aufgabe wird mit einem Triangulationslichttaster mit den Merkmalen der Ansprüche 1, 4 oder 7 gelöst. Erfindungsgemäß ist vorgesehen, dass die Empfangsoptik des Triangulationslichttasters wenigstens ein mehrfach segmentiertes Linsenelement umfasst, das in Triangulationsrichtung aus mehreren Linsensegmenten mit voneinander beabstandeten optischen Achsen besteht. Auf diese Weise entsteht in der Ebene des Lichtempfängers eine Aneinanderreihung von Einzelbildern des Lichtflecks, während quer zur Triangulationsrichtung keine derartige Aufspaltung vorliegt. Das Aspektverhältnis von Länge zu Breite des Lichtflecks auf dem Lichtempfänger, wie auch die Homogenität bzw. der Bestrahlungsstärkeverlauf in Triangulationsrichtung lassen sich über die Segmentanzahl, die Segmentbreite und den Abstand der optischen Achsen der einzelnen Segmente zueinander je nach Anforderungen festlegen. Bei einem vorgegebenen Aspektverhältnis ist die Homogenität um so größer, je höher die Anzahl der Segmente ist.

Ein wesentlicher Vorteil eines Triangulationslichttasters mit einer solchen Empfangsoptik ist es, dass bei Vorliegen des Nennabstands zwischen der Empfangsoptik und dem Lichtempfänger jedes der entstehenden Einzelbilder auf dem Lichtempfänger scharf abgebildet werden kann. Durch geeignete Superposition der Einzelbilder der einzelnen Segmente ist die Uniformität in weitem Bereich anpassbar. Durch die angepasste Anzahl der Segmente ist die Erfüllung des oben geschilderten Drei-Elemente-Kriteriums und ein optimales Verhältnis von Lichtfleck- zu Empfängerelementgröße erreichbar, wodurch eine hohe Detektionssensitivität sichergestellt werden kann.

Eine einfache und zuverlässige Sicherstellung des geschilderten Effekts lässt sich erreichen, wenn die Linsensegmente gleiche Brennweite haben und nur die ihnen zugeordneten optischen Achsen in Triangulationsrichtung verschoben sind.

Es sind jedoch auch Anordnungen möglich, bei denen die einzelnen Linsensegmente zusätzlich unterschiedliche Brennweiten haben, die an die Geometrie und die Notwendigkeiten der jeweiligen Anwendung angepasst sind, also wenn z.B. der Platzbedarf gering ist.

Grundsätzlich ist es auch möglich, dass die einzelnen Linsensegmente Freiformoberflächen als Oberflächen haben, die zur Einstellung der gewünschten Geometrie und Uniformität des abgebildeten Lichtflecks eingesetzt werden.

Eine andere erfindungsgemäße Ausgestaltung sieht die Verwendung einer Empfangsoptik vor, die wenigstens ein Freiform-Linsenelement umfasst, das wenigstens eine Freiformfläche aufweist, die derart geformt ist, dass das Freiform-Linsenelement einem mehrfach segmentierten Linsenelement entspricht, das in Triangulationsrichtung aus mehreren Linsensegmenten mit voneinander beabstandeten optischen Achsen besteht. Ein solches Freiform-Linsenelement simuliert das oben beschriebene in Linsensegmente aufgeteilte Linsenelement der ersten Ausführungsform, so dass damit dieselben Effekte erreicht werden können, wie mit dem oben beschrieben mehrfach segmentierten Linsenelement. Hier ist es jedoch nicht notwendig, einzelne Linsensegmente zueinander zu justieren, da das integrale Freiform-Linsenelement die Funktion des mehrfach segmentierten Linsenelements übernimmt.

Bei einer anderen Ausgestaltung ist vorgesehen, dass die Empfangsoptik wenigstens ein diffraktiv-optisches Element aufweist, das derart ausgestaltet ist, dass seine optischen Ablenkeigenschaften einem mehrfach segmentierten Linsenelement entsprechen, das in Triangulationsrichtung aus mehreren Linsensegmenten mit voneinander beabstandeten optischen Achsen besteht.

Bei dieser Ausgestaltung übernimmt das entsprechend ausgebildete diffraktiv-optische Element die Funktion des mehrfach segmentierten Linsenelements. Ein solches diffraktiv-optisches Element lässt sich einfach herstellen und ist in der Anwendung und Justierung sehr einfach.

Mit einem wie beschrieben ausgestalteten diffraktiv-optischen Element lassen sich dieselben Vorteile und Möglichkeiten erreichen, wie sie oben für das mehrfach segmentierte Linsenelement beschrieben sind.

Sowohl bei Ausgestaltungen mit einem Linsenelement mit einer wie oben beschrieben ausgestalteten Freiformfläche, als auch mit einem wie beschrieben ausgestalteten diffraktiv-optischen Element lassen sich z.B. Linsensegmente simulieren, die zusätzlich zum Versatz ihrer optischen Achsen unterschiedliche Brennweiten aufweisen.

Weitere bevorzugte Ausführungsformen des erfindungsgemäßen Triangulationslichttasters sind in den Unteransprüchen, der Beschreibung und den Zeichnungen offenbart.

Die Erfindung wird nachfolgend anhand eines Ausführungsbeispiels unter Bezugnahme auf die anliegenden Figuren beschrieben. Die Figuren sind dabei schematisch zu verstehen und nicht maßstabsgetreu. Es zeigen:
- Fig. 1: eine schematische Darstellung eines erfindungsgemäßen Triangulationslichttasters,
- Fig. 2: eine schematische Darstellung eines segmentierten Linsenelements, wobei sich die Triangulationsrichtung in der Bildebene befindet.
- Fig. 3: eine Vergleichsdarstellung des Strahlengangs eines nicht-segmentierten Linsenelements, und
- Fig. 4: eine Draufsicht auf einen Lichtempfänger eines erfindungsgemäßen Triangulationslichttasters mit einem in Triangulationsrichtung verbreiterten Lichtfleck.

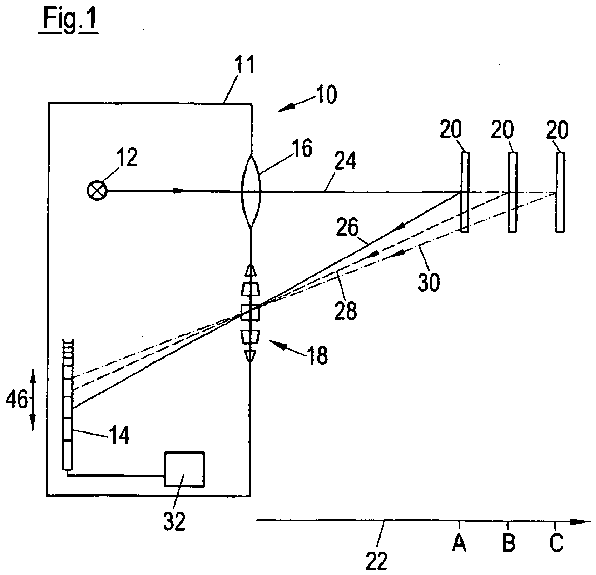

Fig. 1 zeigt einen Triangulationstaster 10. Von einer Lichtquelle 12, z.B. einer Laserdiode, wird Licht 24 durch eine Sendeoptik 16 in Richtung einer Detektionszone geschickt, die durch den Pfeil 22 angedeutet ist. Das Licht 24 trifft auf ein Objekt 20 in der Detektionszone 22 und wird von diesem Objekt zum Triangulationslichttaster 10 zurückreflektiert. Durch die Empfangsoptik 18 trifft das Licht auf den Lichtempfänger 14. Dabei zeigt der Lichtstrahl 26 den Lichtweg eines Lichtstrahls, der an einem Objekt 20 reflektiert wird, das sich in der Position A befindet, der Lichtstrahl 28 zeigt den Strahlengang eines Lichtstrahls, der von einem Objekt 20 reflektiert wird, das sich in der Position B befindet und der Lichtstrahl 30 zeigt den Strahlengang Lichtstrahls, der von einem Objekt 20 reflektiert wird, das sich in der Position C befindet. Durch die Empfangsoptik 18 wird das Licht auf den Lichtempfänger 14 weitergeleitet. Dieser Lichtempfänger 14 besteht aus einer Anzahl von Fotodiodenelementen, die in Triangulationsrichtung 46 nebeneinander angeordnet sind. Das Signal dieser Fotodiodenzeile wird - wie hier schematisch dargestellt - von einer Auswerteeinheit 32 ausgewertet, die aus der Position des Schwerpunkts des auf dem Lichtempfänger 14 gebildeten Lichtflecks auf die Position des Objekts 20 zurückschießen kann. Die Komponenten des Triangulationstasters können in einem Gehäuse 11 angeordnet sein, wobei die Empfangsoptik 18 eine Apertur darstellt. Zwischen der Position des Schwerpunkts des Lichtflecks auf dem Lichtempfänger 14 und der Position des Objekts 20 besteht ein eindeutiger geometrischer Zusammenhang. Bei der gezeigten Ausführungsform haben die einzelnen Empfängerelemente des Lichtempfängers 14 eine unterschiedliche Ausdehnung in Triangulationsrichtung 46, um dem Umstand Rechnung zu tragen, dass bei kleinerem Abstand zwischen dem Objekt 20 und dem Triangulationslichttaster 10 die Änderung der Position des Lichtflecks auf dem Lichtempfänger 14 bei Verschiebung des Objekts 20 um einen bestimmten Absolutwert größer ist als die Änderung der Position des Lichtflecks auf dem Lichtempfänger 14 bei derselben Absolutverschiebung, wenn sich das Objekt 20 in größerem Abstand vom Triangulationslichttaster 10 befindet.

Die Auswerteeinheit 32 bestimmt aus der Position des Schwerpunkts des Lichtflecks in Triangulationsrichtung 46 den Abstand des Objekts 20 vom Triangulationslichttaster 10.

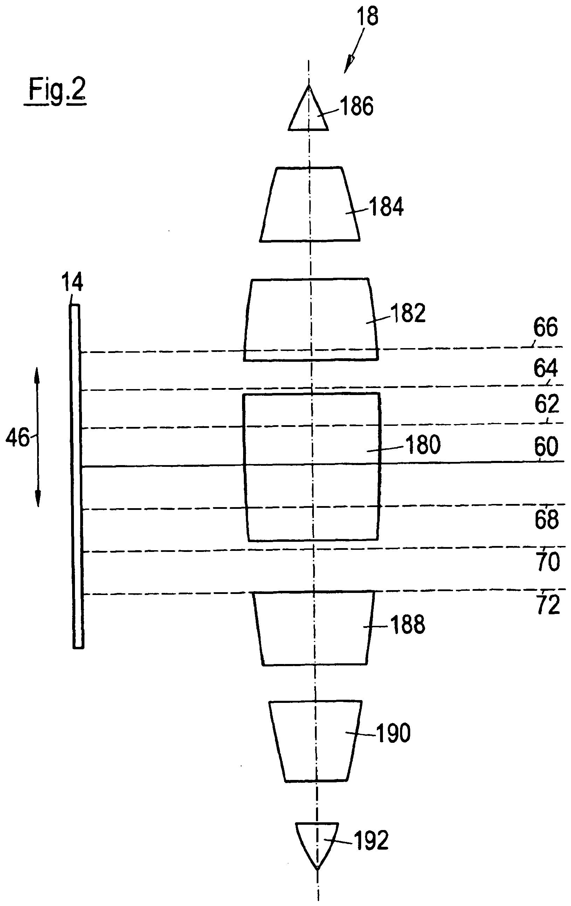

In Fig. 2 ist die Empfangsoptik 18 vergrößert dargestellt, wobei sich die Triangulationsrichtung 46 in der Bildebene befindet. Die Empfangsoptik umfasst hier ein segmentiertes Linsenelement 18 mit mehreren Segmenten 180, 182, 184, 186, 188, 190 und 192. Bei der beschriebenen einfachen Ausgestaltung kann man sich dieses segmentierte Linsenelement 18 so vorstellen, dass eine ursprünglich integrale Linse in Segmente aufgeteilt wird, die derart verschoben sind, dass sie unterschiedliche optische Achsen aufweisen. Beim gezeigten Beispiel hat das Linsenelement 180 die optische Achse 60, das Linsenelement 182 die optische Achse 62, das Linsenelement 184 die optische Achse 64, das Linsenelement 186 die optische Achse 66, das Linsenelement 188 die optische Achse 68, das Linsenelement 190 die optische Achse 70 und das Linsenelement 192 die optische Achse 72.

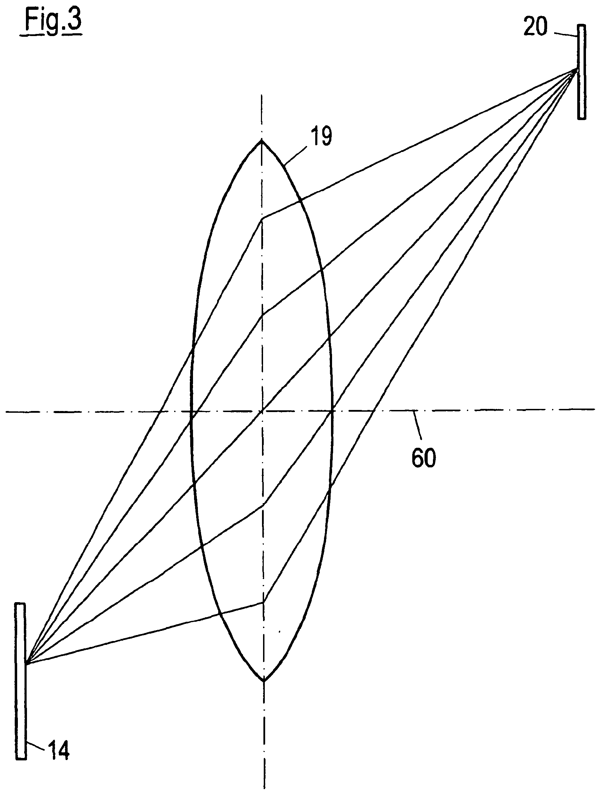

Nur zum Vergleich ist in Fig. 3 ein nicht-segmentiertes Linsenelement 19 gezeigt, wobei hier Strahlengänge eingezeichnet sind, wie sie vorliegen, wenn sich das Objekt 20 und der Lichtempfänger 14 jeweils in der Brennebene befinden. Der Einfachheit halber ist hier die optische Achse auch mit Bezugsziffer 60 bezeichnet.

Mit einem segmentierten Linsenelement 18 der erfindungsgemäßen Ausführungsform, wie sie in Fig. 2 gezeigt ist, bilden die einzelnen Lichtsegmente das reflektierte Licht auf dem Lichtempfänger 14 in Einzelbildern ab, so dass sich in Triangulationsrichtung eine Aneinanderreihung von Einzelbildern ergibt, wobei jedes der entstehenden Einzelbilder auf dem Lichtempfänger scharf abgebildet wird. Durch geeignete Superposition der Einzelbilder z.B. in der Auswerteeinheit 32 ist die Uniformität in weitem Bereich anpassbar. Insbesondere lässt sich durch eine entsprechende Anzahl der Segmente das oben geschilderte Drei-Elemente-Kriterium und ein optimales Verhältnis von Lichtfleck- zu Empfängerelementgröße erreichen.

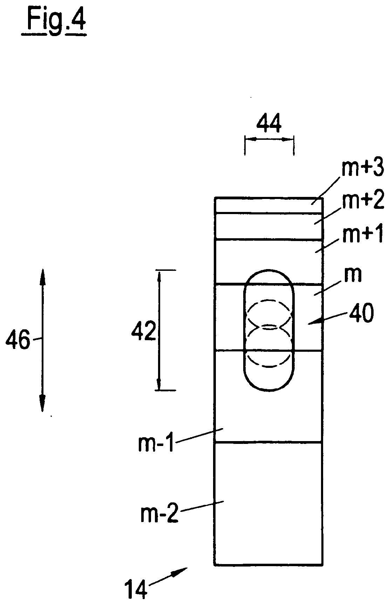

Fig. 4 zeigt die Draufsicht auf einen Lichtempfänger 14 bei dieser Anwendung. Man sieht hier die Zusammensetzung des Lichtempfängers 14 aus mehreren Empfängerelementen, die sich um das zentrale Empfängerelement m gruppieren. Die Empfängerelemente m+1, m+2, m+3 werden von Lichtflecken getroffen, die von einem Objekt 20 reflektiert werden, das in größerer Entfernung von dem Triangulationslichttaster 10 in der Detektionszone 22 positioniert ist, während die Empfängerelemente m-1, m-2 von Lichtflecken getroffen werden, wenn sich das Objekt 20 in größerer Nähe zum Triangulationslichttaster 10 befindet.

Wie es in Fig. 4 sichtbar ist, erstreckt sich der bei Abbildung durch die in Fig. 2 gezeigte Empfangsoptik 18 entstehende Lichtfleck 40 hier über drei Empfängerelemente m+1, m und m-1. Gestrichelt und nur beispielhaft sind hier die Lichtflecken gezeigt, wie sie der optischen Abbildung durch jeweils ein Segment der Empfangsoptik 18 entstehen. Diese einzelnen Lichtflecken addieren sich zu dem Gesamtlichtfleck 40.

Insbesondere entsteht ein Lichtfleck 40, der in Triangulationsrichtung 46 eine Ausdehnung 42 hat und quer zur Triangulationsrichtung 46 eine Ausdehnung 44.

Unterschiedliche Abstände bzw. unterschiedliche Segmentierungen eines solchen Linsenelements ermöglichen unterschiedliche Aspektverhältnisse von Länge zu Breite des Lichtflecks bzw. unterschiedliche Homogenität des Lichtflecks, wie er in Fig. 4 beispielhaft gezeigt ist. So ist z.B. bei vorgegebenem Aspektverhältnis zwischen Ausdehnung 42 in Triangulationsrichtung und Ausdehnung 44 quer zur Triangulationsrichtung die Homogenität um so höher, je höher die gewählte Anzahl der Segmente ist.

Die geschilderte Ausführungsform ist eine sehr einfache und leicht zu realisierende Möglichkeit, wobei hier die Brennweiten der einzelnen Linsensegmente gleich sind. Andere Ausführungsformen sehen vor, dass sich die Brennweiten der einzelnen Linsenelemente zusätzlich zu ihrer unterschiedlichen optischen Achse unterscheiden, so dass eine Anpassung z.B. an einen begrenzten Platzbedarf das Triangulationslichttasters leichter realisiert werden kann. Je nach Anforderungen ist es auch möglich, dass die einzelnen Linsensegmente Freiformflächen haben, die entsprechende Abbildungsgeometrien ermöglichen, die sich aus den Umständen und dem Platzbedarf ergeben.

Nicht dargestellt ist eine Ausführungsform, bei der die Empfangsoptik 18 aus durch ein Freiform-Linsenelement gebildet wird, das derart geformt ist, dass es das segmentierte Linsenelement 18 simuliert, das in Fig. 2 dargestellt ist.

Ein solches Freiformelement bietet den Vorteil, dass weniger fertigungstechnische Grenzen für die beliebige Erhöhung der Anzahl der Segmente eingehalten werden müssen.

Ebenso ist ein segmentiertes Linsenelement möglich, bei dem die einzelnen Segmente wiederum als Freiformflächen ausgebildet werden können oder beliebige Kombinationen aus Freiformsegmenten mit sphärischen oder asphärischen Segmenten.

Bei einer alternativen Ausführungsform ist vorgesehen, dass die Funktion des mehrfach segmentierten Linsenelements durch ein entsprechend ausgestaltetes diffraktiv-optisches Element übernommen wird.

### Bezugszeichenliste

- 10: Triangulationslichttaster
- 11: Gehäuse
- 12: Sendelichtquelle
- 14: Lichtempfänger, Fotodiodenzeile
- 16: Sendeoptik
- 18: Empfangsoptik
- 19: integrales Linsenelement
- 20: Objekt
- 22: Detektionszone
- 24: Sendelicht
- 26, 28, 30: reflektiertes Licht
- 32: Auswerteeinheit
- 40: Lichtfleck Ausdehnung des Lichtflecks
- 42: in Triangulationsrichtung Ausdehnung des Lichtflecks
- 44: quer zur Triangulationsrichtung
- 46: Triangulationsrichtung
- 60, 62, 64, 66, 68, 70, 72: optische Achse
- 180, 182, 184, 186, 188, 190, 192: Linsensegment
- m-2, m-1, m, m+1, m+2, m+3: Empfängerelement
- A, B, C: Position

## Patentansprüche

1. Triangulationslichttaster (10) mit
- wenigstens einem Lichtsender (12) zum Aussenden eines Lichtsignales (24) in eine Detektionszone (22),
- einem Lichtempfänger (14), welcher mehrere Empfängerelemente (m-2, m-1, m, m+1, m+2) aufweist, zum Empfangen von Licht (26, 28, 30) aus der Detektionszone (22), welches von einem zu detektierenden Objekt (20) diffus und/oder spiegelnd reflektiert wird, und
- einer Empfangsoptik (18), die im Strahlengang zwischen Detektionszone und Lichtempfänger (14) angeordnet ist,
wobei sich die Position eines von dem reflektierten Licht (26, 28, 30) auf dem Lichtempfänger (14) erzeugten Lichtflecks (40) in einer Triangulationsrichtung (46) in Abhängigkeit von der Entfernung des Objekts (20) ergibt,
wobei die Empfangsoptik wenigstens ein mehrfach segmentiertes Linsenelement (18) umfasst, das aus mehreren Linsensegmenten (180, 182, 184, 186, 188, 190, 192) mit in Triangulationsrichtung (46) voneinander beabstandeten optischen Achsen (60, 62, 64, 66, 68, 70, 72) besteht, und wobei der auf dem Lichtempfänger (14) erzeugte Lichtfleck (40) aus mehreren sich in Triangulationsrichtung (46) überlappenden Einzelbildern gebildet wird, wobei jedes Einzelbild mittels eines der Linsensegmente (180, 182, 184, 186, 188, 190, 192) erzeugt wird,
**dadurch gekennzeichnet,**
**dass** das mehrfach segmentierte Linsenelement (18) einer Anordnung entspricht, die durch ein Aufteilen einer ursprünglich integralen Linse in die mehreren Linsensegmente (180, 182, 184, 186, 188, 190, 192) und ein Verschieben der mehreren Linsensegmente (180, 182, 184, 186, 188, 190, 192) in Triangulationsrichtung (46) derart, dass die mehreren Linsensegmente (180, 182, 184, 186, 188, 190, 192) entsprechend dem Abstand ihrer optischen Achsen (60, 62, 64, 66, 68, 70, 72) von einander beabstandet sind, erzeugt ist.

2. Triangulationslichttaster nach Anspruch 1, **dadurch gekennzeichnet, dass** die mehreren Linsensegmente zusätzlich unterschiedliche Brennweiten haben.

3. Triangulationslichttaster nach einem der Ansprüche 1 oder 2, **dadurch gekennzeichnet, dass** die Linsensegmente (180, 182, 184, 186, 188, 190, 192) derart angeordnet und ausgestaltet sind, dass der durch die Empfangsoptik (18) auf dem Lichtempfänger (14) erzeugte Lichtfleck in Triangulationsrichtung (46) langgestreckt ist, vorzugsweise derart, dass er wenigstens drei Empfängerelemente (m-1, m, m+1) trifft.

## Claims

1. A triangulation light sensor (10) comprising
- at least one light transmitter (12) for transmitting a light signal (24) into a detection zone (22);
- a light receiver (14) which has a plurality of receiver elements (m-2, m-1, m, m+1, m+2) for receiving light (26, 28, 30) from the detection zone (22) which is reflected diffusely and/or in a specular manner by an object (20) to be detected; and
- a reception optics (18) which is arranged in the beam path between the detection zone and the light receiver (14),
wherein the position of a light spot (40) generated on the light receiver (14) by the reflected light (26, 28, 30) in a triangulation direction (46) results in dependence on the distance of the object (20);
wherein the reception optics includes at least one multiply segmented lens element (18) which comprises a plurality of lens segments (180, 182, 184, 186, 188, 190, 192) having optical axes (60, 62, 64, 66, 68, 70, 72) spaced apart from one another in the triangulation direction (46), and wherein the light spot (40) generated on the light receiver (14) is formed from a plurality of individual images overlapping in the triangulation direction (46), with each individual image being generated by means of one of the lens segments (180, 182, 184, 186, 188, 190, 192),
**characterised in that**
the multiply segmented lens element (18) corresponds to an arrangement which is generated by a division of an originally integral lens into the plurality of lens segments (180, 182, 184, 186, 188, 190, 192) and by a displacement of the plurality of lens segments (180, 182, 184, 186, 188, 190, 192) in the triangulation direction (46) such that the plurality of lens segments (180, 182, 184, 186, 188, 190, 192) are spaced apart from one another in accordance with the spacing of their optical axes (60, 62, 64, 66, 68, 70, 72).

2. A triangulation light sensor in accordance with claim 1, **characterised in that** the plurality of lens segments additionally have different focal lengths.

3. A triangulation light sensor in accordance with one of the claims 1 or 2, **characterised in that** the lens segments (180, 128, 184, 186, 188, 190, 192) are arranged and configured such that the light spot generated on the light receiver (14) by the reception optics (18) is elongated in the triangulation direction (46), preferably such that it is incident on at least three receiver elements (m-1, m, m+1).

## Revendications

1. Palpeur de lumière à triangulation (10) comprenant
- au moins un émetteur de lumière (12) pour émettre un signal lumineux (24) dans une zone de détection (22),
- un récepteur de lumière (14), qui comprend plusieurs éléments récepteurs (m-2, m-1, m, m+1, m+2), pour recevoir de la lumière (26, 28, 30) provenant de la zone de détection (22), qui est réfléchie de manière diffuse et/ou à la manière d'un miroir par un objet (20) à détecter, et
- une optique de réception (18) qui est agencée dans le trajet des rayons entre la zone de détection et le récepteur de lumière (14),
dans lequel la position d'une tache lumineuse (40) engendrée sur le récepteur de lumière (14) par la lumière réfléchie (26, 28, 30) dans une direction de triangulation (46) résulte en fonction de l'éloignement de l'objet (20),
dans lequel l'optique de réception comprend au moins un élément de lentille (18) segmenté de manière multiple, qui est composé de plusieurs segments de lentilles (180, 182, 184, 186, 188, 190, 192) avec des axes optiques (60, 62, 64, 66, 68, 70, 72) écartés les uns des autres en direction de triangulation (46), et dans lequel la tache lumineuse (40) engendrée sur le récepteur de lumière (14) est formée de plusieurs images individuelles qui se chevauchent en direction de triangulation (46), telles que chaque image individuelle est engendrée au moyen de l'un des segments de lentilles (180, 182, 184, 186, 188, 190, 192),
**caractérisé en ce que**
l'élément de lentille (18) segmenté de manière multiple correspond à un agencement qui est engendré par une subdivision d'une lentille initialement intégrale pour donner les plusieurs segments de lentilles (180, 182, 184, 186, 188, 190, 192) et par un décalage des plusieurs segments de lentilles (180, 182, 184, 186, 188, 190, 192) en direction de triangulation de telle façon que les plusieurs segments de lentilles (180, 182, 184, 186, 188, 190, 192) sont écartés les uns des autres en correspondance de la distance de leurs axes optiques (60, 62, 64, 66, 68, 70, 72) les uns des autres.

2. Palpeur de lumière à triangulation selon la revendication 1, **caractérisé en ce que** les plusieurs segments de lentilles ont additionnellement des distances focales différentes.

3. Palpeur de lumière à triangulation selon l'une des revendications 1 ou 2, **caractérisé en ce que** les segments de lentilles (180, 182, 184, 186, 188, 190, 192) sont agencés et conçus de manière que la tache lumineuse engendrée par l'optique de réception (18) sur le récepteur de lumière (14) est allongée en direction de triangulation (46), de préférence de telle manière qu'elle tombe sur au moins trois éléments récepteurs (m-1, m, m+1).
